# EUROPÄISCHE PATENTANMELDUNG

(11) **EP 1 324 585 A1**
(43) Veröffentlichungstag der Anmeldung: **02.07.2003**
(21) Anmeldenummer: 01130030.8
(22) Anmeldetag: 18.12.2001
(51) Int. Cl.: H04N 1/195, H04N 1/04

(54) **Vorrichtung und Verfahren zum elektronischen Erfassen eines hochaufgelösten Bildes eines Gegenstandes**

(71) Anmelder: Agfa-Gevaert AG, 51373 Leverkusen (DE)
(72) Erfinder: Müller, Peter, 86415 Mering (DE); Musewald, Christian, 81545 München (DE)

(57) **Zusammenfassung**

Die Erfindung betrifft eine Vorrichtung und ein Verfahren zum elektronischen Erfassen eines hochaufgelösten Bildes (5) eines Gegenstandes (1) mit einer Bildspeichervorrichtung (14) zum Speichern von Lichtinformation, die mehrere Bildspeicherelemente (15) mit einer gegebenen geometrischen Ausdehnung (d) aufweist, und einer Abbildungseinrichtung (2), die den Gegenstand (1) auf eine Bildebene (4) in der Vorrichtung abbildet.

Um bei kurzer Belichtungszeit eine erhöhte Auflösung kostengünstig herzustellen, ist erfindungsgemäß eine Separatorvorrichtung (6, 17), durch die ein erster Teil des Lichtes von dem Gegenstand (1) über einen ersten Lichtausbreitungspfad (11) und ein zweiter Teil des Lichtes von dem Gegenstand (1) über einen zweiten Lichtausbreitungspfad (12) zu der Bildspeichervorrichtung (14) abgelenkt wird, so dass eine Abbildung (16) von dem Gegenstand (1) auf der Bildspeichervorrichtung (14) erzeugt wird, und eine Verschlussvorrichtung (13a, 13b), durch die nacheinander jeder der zwei Lichtausbreitungspfade (11, 12) selektiv geöffnet und geschlossen wird, so dass von der Bildspeichervorrichtung (14) nacheinander der erste Teil des Lichts von dem Gegenstand (1) über den ersten Lichtausbreitungspfad (11) und der zweite Teil des Lichts von dem Gegenstand (1) über den zweiten Lichtausbreitungspfad (12) erfasst wird, vorgesehen.

## Beschreibung

Die Erfindung betrifft eine Vorrichtung und ein Verfahren zum elektronischen Erfassen eines hochaufgelösten Bildes eines Gegenstandes gemäß dem Oberbegriff von Anspruch 1 bzw. Anspruch 9.

Die Bildaufzeichnung mittels einer digitalen Kamera ist bekannt. Bei dem Verfahren zur elektronischen Bildaufzeichnung unter Verwendung einer Vielzahl von optoelektronischen Bildpunktsensoren nach CH 672 385, wobei eine abzubildende Motivszene optisch in eine Bildebene projiziert und die projizierte Motivszene mittels der Bildpunktsensoren abgefühlt wird, wird die projizierte Motivszene in einer Größe erzeugt, welche die Dimensionen der von einer Schar Bildpunktsensoren belegten Fläche übersteigt, und die projizierte Motivszene wird ausschnittweise mittels mindestens einer Schar Bildpunktsensoren abgefühlt, und die für jeden abgefühlten Ausschnitt der projizierten Motivszene von den Bildpunktsensoren erfassten Helligkeitswerte werden in entsprechende elektrische Werte umgesetzt, digitalisiert und derart gespeichert, dass aus der Gesamtheit der gespeicherten elektrischen Werte ein Bild der projizierten Motivszene rekonstruierbar ist.

Mit anderen Worten, zur Auflösungserhöhung wird eine sequentielle Belichtung vorgenommen, wobei zwischen zwei Belichtungen das Motiv mittels schwenkbarer Strahlablenkungsprismen leicht versetzt wird oder das Motiv mittels reflektierender Spiegel leicht versetzt auf mehrere Aufnahmesensoren abgebildet wird.

Ein Nachteil bei diesem Stand der Technik besteht darin, dass entweder bewegliche Bauteile in einer digitalen Kamera während der Belichtungsphase umgeschaltet werden müssen, was viel Zeit kostet und zu verwackelten Aufnahmen führt, oder mehrere Aufnahmesensoren verwendet werden müssen, was den Preis der Kamera erhöht.

Es ist Aufgabe der vorliegenden Erfindung, eine Bilderfassungsvorrichtung wie z.B. eine Kamera zu schaffen, die bei kurzer Belichtungszeit eine erhöhte Auflösung aufweist und die kostengünstig herzustellen ist.

Diese Aufgabe wird erfindungsgemäß gelöst durch eine Vorrichtung und ein Verfahren zum elektronischen Erfassen eines hochaufgelösten Bildes nach Anspruch 1 bzw. Anspruch 9. Bevorzugte Ausführungsformen der Erfindung sind Gegenstand der jeweiligen Unteransprüche.

Die Idee, die der Erfindung zugrunde liegt, ist es, die Bildinformation mit einer Blaze- Platte o. dgl. in mehrere Bestandteile zu zerlegen und die Teilbilder mit einer CCD- Vorrichtung aufzunehmen, wobei durch einen Verschluss sequentiell immer nur ein Teilbild auf die CCD- Vorrichtung gelangt.

Die erfindungsgemäße Vorrichtung zum elektronischen Erfassen eines hochaufgelösten Bildes eines Gegenstandes mit einer Bildspeichervorrichtung zum Speichern von Lichtinformation, die mehrere Bildspeicherelemente mit einer gegebenen geometrischen Ausdehnung aufweist, und einer Abbildungseinrichtung, die den Gegenstand auf eine Bildebene in der Vorrichtung abbildet, ist gekennzeichnet durch eine Separatorvorrichtung, durch die ein erster Teil des Lichtes von dem Gegenstand über einen ersten Lichtausbreitungspfad und ein zweiter Teil des Lichtes von dem Gegenstand über einen zweiten Lichtausbreitungspfad zu der Bildspeichervorrichtung abgelenkt wird, so dass eine Abbildung von dem Gegenstand auf der Bildspeichervorrichtung erzeugt wird, und eine Verschlussvorrichtung, durch die nacheinander jeder der zwei Lichtausbreitungspfade selektiv geöffnet und geschlossen wird, so dass von der Bildspeichervorrichtung nacheinander der erste Teil des Lichts von dem Gegenstand über den ersten Lichtausbreitungspfad und der zweite Teil des Lichts von dem Gegenstand über den zweiten Lichtausbreitungspfad erfasst wird.

Insbesondere ist dabei die Separatorvorrichtung eine Blaze- Platte, die mehrere Reflektorelemente mit jeweils wenigstens zwei Seitenflächen umfasst, die einen Winkel einschließen und von denen das Licht reflektiert wird, so dass es sich über die wenigstens zwei unterschiedlichen Lichtausbreitungspfade zu der Bildspeichervorrichtung ausbreitet.

Anstelle einer Blaze- Platte kann die Separatorvorrichtung eine transparente Platte sein, die mehrere Prismenelemente mit jeweils wenigstens zwei Seitenflächen umfasst, die einen Winkel einschließen und von denen das Licht gebrochen wird, so dass es sich über die wenigstens zwei unterschiedlichen Lichtausbreitungspfade zu der Bildspeichervorrichtung ausbreitet.

Dabei ist bei den beiden letzten Ausführungsformen die Anzahl der Prismenelemente bzw. die Anzahl der Reflektorelemente bevorzugt gleich der Anzahl der Bildspeicherelemente.

Und insbesondere haben die Reflektor- oder Prismenelemente eine vierseitige Oberfläche, so dass das Licht von dem Gegenstand in vier Richtungen abgelenkt wird und sich von der Bildebene über vier Lichtausbreitungspfade zu der Bildspeichervorrichtung ausbreitet, und die Verschlussvorrichtung zwischen der Separatorvorrichtung und der Bildspeichervorrichtung selektiv einen der vier Lichtausbreitungspfade offen lässt und die restlichen drei Lichtausbreitungspfade unterbricht.

Bevorzugt ist die Verschlussvorrichtung ein mechanischer Verschluss (Shutter) oder eine elektronisch ansteuerbare LCD- Vorrichtung.

Das entsprechende Verfahren zum elektronischen Erfassen eines Bildes eines Gegenstandes mit den Schritten: Speichern von Lichtinformation durch eine Bildspeichervorrichtung, die mehrere Bildspeicherelemente mit einer gegebenen geometrischen Ausdehnung aufweist, und Abbilden des Gegenstands durch eine Abbildungseinrichtung auf eine Bildebene in der Vorrichtung, ist gekennzeichnet durch die Schritte: Ablenken eines ersten Teils des Lichtes von dem Gegenstand über einen ersten Lichtausbreitungspfad und eines zweiten Teils des Lichtes von dem Gegenstand über einen zweiten Lichtausbreitungspfad zu der Bildspeichervorrichtung durch eine Separatorvorrichtung, so dass eine Abbildung von dem Gegenstand auf der Bildspeichervorrichtung erzeugt wird, und selektives Öffnen und Schließen jedes der wenigstens zwei Lichtausbreitungspfade nacheinander durch eine Verschlussvorrichtung, so dass von der Bildspeichervorrichtung nacheinander der erste Teil des Lichts von dem Gegenstand über den ersten Lichtausbreitungspfad und der zweite Teil des Lichts von dem Gegenstand über den zweiten Lichtausbreitungspfad erfasst wird.

Es ist ein Vorteil der vorliegenden Erfindung gegenüber dem Stand der Technik, dass keine optischen Elemente mechanisch bewegt werden müssen und dadurch keine aufwendigen Justageschritte durchgeführt werden müssen.

Weitere Merkmale und Vorteile der Erfindung ergeben sich aus der folgenden Beschreibung bevorzugter Ausführungsformen, wobei auf die beigefügten Zeichnungen Bezug genommen wird.

Fig. 1 zeigt eine Ausführungsform der erfindungsgemäßen Vorrichtung zum elektronischen Erfassen eines hochaufgelösten Bildes.

Fig. 2A und 2B zeigt eine Ausführungsform der erfindungsgemäßen Separatorvorrichtung bzw. eine Detailansicht davon.

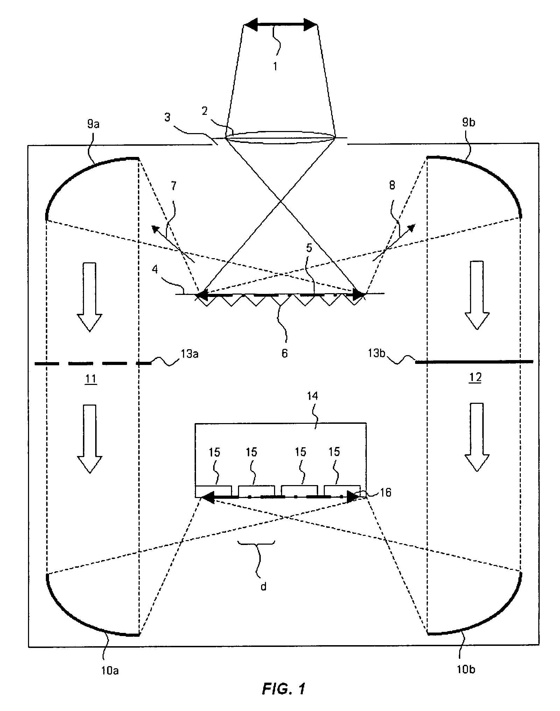

In Fig. 1 ist der Aufbau einer Vorrichtung gezeigt, mit der sich ein hochaufgelöstes Bild mit einer CCD- Vorrichtung erzeugen lässt. Ein Gegenstand 1, der abgebildet werden soll, ist beispielsweise ein Film, dessen chemisch gespeicherte Information elektronisch erfasst werden soll. Es kann sich aber auch um einen beliebigen zu fotografierenden Gegenstand in der Landschaft handeln. Der Gegenstand 1 wird durch eine Abbildungsoptik 2 vor oder hinter einer Eingangsöffnung 3 der Vorrichtung auf eine Bildebene 4 innerhalb der Vorrichtung abgebildet. Dieses erste Bild 5 des Gegenstandes 1 soll von einer Bildspeichervorrichtung 14 zum Speichern von Lichtinformation, die mehrere Bildspeicherelemente 15 umfasst, abgespeichert werden. Die Bildspeichervorrichtung 14 ist in der Darstellung in Fig. 1 die CCD- Vorrichtung. Ihre einzelnen Bildspeicherelemente 15 haben eine gegebene geometrische Ausdehnung, die in Fig. 1 mit d bezeichnet ist, und sind einzeln elektronisch auslesbar.

Da die Bildspeicherelemente 15 die Größe d haben, die wesentlich über der von z.B. Körnern in der photographischen Schicht eines Films liegt, muss man die räumliche Auflösung der von der CCD- Vorrichtung gespeicherten Information erhöhen, indem von dem Bild 5 des Gegenstandes 1 wenigstens eine erste und eine zweite Halbabbildung erfasst wird. Beide Halbabbildungen (oder allgemeiner die mehreren Teilabbildungen) zusammen ergeben die Abbildung des Gegenstands 1 auf der Bildspeichervorrichtung 14. Aufgrund dieser Zerlegung der Abbildung des Gegenstandes 1 in zwei Halb- oder mehrere Teilabbildungen ist es möglich, jede dieser Halb- bzw. Teilabbildungen mit der höchsten Auflösung der Bildspeichervorrichtung 14 zu erfassen. Bei zwei Halbabbildungen ergibt sich so bei der späteren Verarbeitung der Daten aus der Bildspeichervorrichtung 14 eine Verdopplung der Auflösung, bei vier Viertelabbildungen ergibt sich eine Vervierfachung der Auflösung usw.

Erfindungsgemäß ist zu der Aufspaltung des Lichts von dem Gegenstand 1 in mehrere Anteile in der Vorrichtung eine Separatorvorrichtung 6 vorgesehen, die in der dargestellten Ausführungsform in der Bildebene 4 angeordnet ist. Der mögliche Aufbau der Separatorvorrichtung 6 in der Bildebene 4 wird im einzelnen weiter unten erläutert. In jedem Fall wird durch die Separatorvorrichtung 6 Licht aus der Bildebene 4 in wenigstens eine erste Richtung 7 und eine zweite Richtung 8 abgelenkt.

In die erste Richtung 7 abgelenktes Licht, d.h. ein erster Teil des Lichts von dem Gegenstand 1, trifft auf einen ersten Umlenkspiegel 9a, der insbesondere ein Hohlspiegel ist. Über einen ersten Lichtausbreitungspfad 11 gelangt das Licht zu einem zweiten Umlenkspiegel 10a und von diesem schließlich auf die Bildspeichervorrichtung 14 mit den einzelnen Bildspeicherelementen 15. Dieser erste Teil des Lichts von dem Gegenstand 1, der über den ersten Lichtausbreitungspfad 11 auf die Bildspeichervorrichtung 14 gelangt, erzeugt dort eine erste Halbabbildung des Bildes 5 in der Bildebene 4.

Analog trifft in die zweite Richtung 8 abgelenktes Licht, d.h. ein zweiter Teil des Lichts von dem Gegenstand 1, auf einen zweiten Umlenkspiegel 9b, der insbesondere ein Hohlspiegel ist. Über einen zweiten Lichtausbreitungspfad 12 gelangt das Licht zu einem zweiten Umlenkspiegel 10b und von diesem schließlich auf die Bildspeichervorrichtung 14 mit den einzelnen Bildspeicherelementen 15. Dieser zweite Teil des Lichts von dem Gegenstand 1, der über den zweiten Lichtausbreitungspfad 12 auf die Bildspeichervorrichtung 14 gelangt, erzeugt dort eine zweite Halbabbildung des Bildes 5 in der Bildebene 4.

Beide Halbabbildungen zusammen ergeben eine Abbildung 16 des (Zwischen-) Bildes 5 bzw. des Gegenstands 1 auf der Bildspeichervorrichtung 14.

Erfindungsgemäß wird jeder der wenigstens zwei Lichtausbreitungspfade 11, 12 nacheinander selektiv geöffnet und geschlossen. Damit wird erreicht, dass die zwei Halbabbildungen, die zusammen die Abbildung 16 ergeben, von der Bildspeichervorrichtung 14 nacheinander erfasst werden können. Diese Halb- oder Teilabbildungen werden einzeln in einem (nicht dargestellten) Speicher abgespeichert und anschließend weiterverarbeitet. Dabei wird bei zwei Halbabbildungen, die zusammen Abbildung 16 ergeben, die Anzahl der Bildelemente bei der nachfolgenden Bearbeitung doppelt so hoch zu wählen sein, wie die Anzahl der Bildspeicherelemente 15 der Bildspeichervorrichtung 14, mit der die Abbildungen erfasst und abgespeichert wurden. Analog wird bei vier Abbildungen über vier Lichtausbreitungspfaden mit den entsprechenden vierfach ausgelegten optischen Elementen 9 und 10 die Anzahl der Bildelemente bei der nachfolgenden Bearbeitung viermal so hoch zu wählen sein; etc.

Um das selektive Öffnen und Schließen der Lichtausbreitungspfade 11 und 12 zu bewerkstelligen, ist eine Verschlussvorrichtung 13 vorgesehen, die so viele Verschlusselemente wie Lichtausbreitungspfade aufweist. In Fig. 1 umfasst die Verschlussvorrichtung 13 einen ersten Verschluss 13a in dem Lichtausbreitungspfad 11 und einen zweiten Verschluss 13b in dem Lichtausbreitungspfad 12. Durch eine (nicht dargestellte) logische Verknüpfung der beiden Verschlüsse 13a und 13b wird selektiv einer der beiden Lichtausbreitungspfade 11 und 12 geöffnet, und der jeweils andere Lichtausbreitungspfad wird unterbrochen.

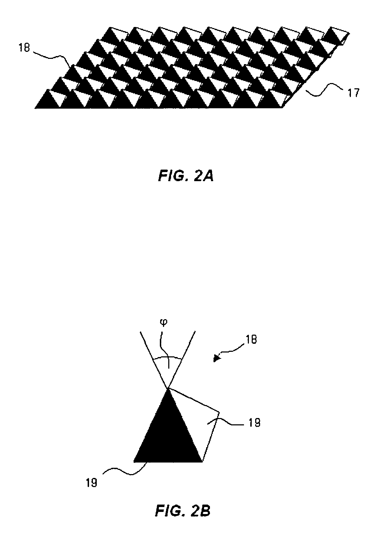

In Fig. 2A ist eine Ausführungsform der Separatorvorrichtung 6 in der Bildebene 4 dargestellt. Hierbei handelt es sich um eine Vielfachablenkvorrichtung in Form einer Blaze- Platte 17, die eine Vielzahl von Reflektorelementen 18 aufweist.

Die Blaze- Platte 17 deckt im wesentlichen die gesamte Bildebene 4 der Vorrichtung ab. Licht, das auf sie fällt, wird je nach Auftreffpunkt auf einem der Reflektorelemente 18 in eine von vier Richtungen abgelenkt, analog zu den Richtungen 7 und 8 in Fig. 1.

Einzelheiten der Reflektorelemente werden im folgenden anhand von Fig. 2B erläutert. In einer ersten Ausführungsform weist die Blaze- Platte kleine Spiegel-Pyramiden 18 auf, die jeden "Bildpunkt" von dem Bild 5 in der Bildebene 4 in vier "Teilbildpunkte" aufteilen. Diese Reflektorelemente 18 weisen dazu vier Seitenflächen 19 auf. Vorzugsweise handelt es sich bei den vier Seitenflächen 19 um ähnliche Oberflächensegmente, da das Licht auf alle vorgesehenen Lichtausbreitungspfade (zwei in Fig. 1, nämlich 11 und 12) gleichmäßig verteilt werden soll. In der dargestellten Ausführungsform schließen einander gegenüberliegende Seitenflächen 19 einen Winkel ϕ ein. Von den Seitenflächen 19 wird das Licht von der Bildebene 4 wie oben erläutert reflektiert, so dass es sich über vier Lichtausbreitungspfade zu der Bildspeichervorrichtung ausbreitet und dort vier verschiedene Abbildungen erzeugt.

Die Einzelelemente der Separatorvorrichtung 6 müssen aber nicht reflektieren. So ist in einer (nicht dargestellten) alternativen Ausführungsform die Separatorvorrichtung 6 statt einer Blaze- Platte eine transparente Platte, die statt der Reflektorelemente 18 mehrere Prismenelemente mit vier Seitenflächen umfasst, die wiederum einen Winkel ϕ einschließen. In diesem Fall wird das Licht nicht von dem Elementen der Separatorvorrichtung 6 reflektiert, sondern es wird stattdessen gebrochen, so dass es sich über vier Lichtausbreitungspfade (hinter der Separatorvorrichtung) zu der Bildspeichervorrichtung 14 ausbreitet.

Die Anzahl der Reflektorelemente 18 bzw. die Anzahl der Prismenelemente ist insbesondere gleich der Anzahl der Bildspeicherelemente 15. Damit erhält man eine eindeutige Zuordnung der einzelnen Elemente zum Erfassen der Bildinformation.

Bei vier Oberflächensegmenten der Einzelelemente der Separatorvorrichtung 6 ist entsprechend eine Verschlussvorrichtung mit vier Verschlüssen vorgesehen, d.h. jeweils ein Verschluss pro Lichtausbreitungspfad. Als Verschlüsse können sowohl mechanische Verschlussblenden als auch elektronische "Shutter" verwendet werden. Außer Verschlussblenden kann auch ein Lichtventil (LCD- Vorrichtung) verwendet werden.

Die Erfindung ist nicht auf die oben beschriebenen Ausführungsformen beschränkt. So ist die Separatorvorrichtung 6 in der Bildebene 4 dargestellt, d.h. in der Ebene eines Zwischenbildes. Dies ist in der Praxis von Vorteil. Es ist aber auch denkbar, dass durch die Abbildungsoptik 2 am Eingang 3 der erfindungsgemäßen Vorrichtung der Gegenstand 1 direkt auf die Bildspeichervorrichtung 14 abgebildet wird und nicht erst ein Zwischenbild 5 von ihm erzeugt wird, d.h. Bildebene 4 und Bildspeichervorrichtung 14 fallen zusammen.

### Bezugszeichen

- 1: Gegenstand
- 2: Abbildungsoptik
- 3: Eingang der Vorrichtung
- 4: Bildebene in der Vorrichtung
- 5: Bild von Gegenstand in Bildebene
- 6: Separatorvorrichtung
- 7: erste Richtung
- 8: zweite Richtung
- 9: erster Spiegel, 9a erster Spiegel links, 9b erster Spiegel rechts
- 10: zweiter Spiegel, 10a zweiter Spiegel links, 10b zweiter Spiegel rechts
- 11: erster Lichtausbreitungspfad
- 12: zweiter Lichtausbreitungspfad
- 13: Verschlussvorrichtung, 13a Verschlussvorrichtung in erstem Lichtausbreitungspfad, 13b Verschlussvorrichtung in zweitem Lichtausbreitungspfad
- 14: Bildspeichervorrichtung, CCD- Vorrichtung
- 15: Bildspeicherelement
- 16: Abbildung auf Bildspeichervorrichtung
- 17: Blaze- Platte
- 18: Reflektorelement der Blaze- Platte
- 19: Seitenfläche von Reflektorelement
- d: geometrischen Ausdehnung
- ϕ: Winkel zwischen Seitenflächen eines Reflektorelements

## Patentansprüche

1. Vorrichtung zum elektronischen Erfassen eines hochaufgelösten Bildes (5) eines Gegenstandes (1) mit einer Bildspeichervorrichtung (14) zum Speichern von Lichtinformation, die mehrere Bildspeicherelemente (15) mit einer gegebenen geometrischen Ausdehnung (d) aufweist, und einer Abbildungseinrichtung (2), die den Gegenstand (1) auf eine Bildebene (4) in der Vorrichtung abbildet, **gekennzeichnet durch** eine Separatorvorrichtung (6, 17), **durch** die ein erster Teil des Lichtes von dem Gegenstand (1) über einen ersten Lichtausbreitungspfad (11) und ein zweiter Teil des Lichtes von dem Gegenstand (1) über einen zweiten Lichtausbreitungspfad (12) zu der Bildspeichervorrichtung (14) abgelenkt wird, so dass eine Abbildung (16) von dem Gegenstand (1) auf der Bildspeichervorrichtung (14) erzeugt wird, und eine Verschlussvorrichtung (13a, 13b), **durch** die nacheinander jeder der zwei Lichtausbreitungspfade (11, 12) selektiv geöffnet und geschlossen wird, so dass von der Bildspeichervorrichtung (14) nacheinander der erste Teil des Lichts von dem Gegenstand (1) über den ersten Lichtausbreitungspfad (11) und der zweite Teil des Lichts von dem Gegenstand (1) über den zweiten Lichtausbreitungspfad (12) erfasst wird.

2. Vorrichtung nach Anspruch 1, **dadurch gekennzeichnet, dass** die Separatorvorrichtung (6) eine Blaze- Platte (17) ist, die mehrere Reflektorelemente (18) mit jeweils wenigstens zwei Seitenflächen (19) umfasst, die einen Winkel (ϕ) einschließen und von denen das Licht reflektiert wird, so dass es sich über die wenigstens zwei unterschiedlichen Lichtausbreitungspfade (11, 12) zu der Bildspeichervorrichtung (14) ausbreitet.

3. Vorrichtung nach Anspruch 2, **dadurch gekennzeichnet, dass** die Anzahl der Reflektorelemente (18) mindestens gleich der Anzahl der Bildspeicherelemente (15) ist.

4. Vorrichtung nach Anspruch 1, **dadurch gekennzeichnet, dass** die Separatorvorrichtung (6) eine transparente Platte ist, die mehrere Prismenelemente mit jeweils wenigstens zwei Seitenflächen umfasst, die einen Winkel (ϕ) einschließen und von denen das Licht gebrochen wird, so dass es sich über die wenigstens zwei unterschiedlichen Lichtausbreitungspfade (11, 12) zu der Bildspeichervorrichtung (14) ausbreitet.

5. Vorrichtung nach Anspruch 4, **dadurch gekennzeichnet, dass** die Anzahl der Prismenelemente mindestens gleich der Anzahl der Bildspeicherelemente (15) ist.

6. Vorrichtung nach einem der Ansprüche 2 bis 5, **dadurch gekennzeichnet, dass** die Reflektor- oder Prismen- Elemente (18) eine vierseitige Oberfläche haben, so dass das Licht von dem Gegenstand (1) in vier Richtungen abgelenkt wird und sich über vier Lichtausbreitungspfade (11, 12) zu der Bildspeichervorrichtung (14) ausbreitet, und die Verschlussvorrichtung (13a, 13b) zwischen der Separatorvorrichtung (6) und der Bildspeichervorrichtung (14) selektiv einen der vier Lichtausbreitungspfade (11) offen lässt und die restlichen drei Lichtausbreitungspfade (12) unterbricht.

7. Vorrichtung nach einem der vorangehenden Ansprüche, **dadurch gekennzeichnet, dass** die Verschlussvorrichtung (13a, 13b) ein mechanischer Verschluss ist.

8. Vorrichtung nach einem der Ansprüche 1 bis 6, **dadurch gekennzeichnet, dass** die Verschlussvorrichtung (13a, 13b) eine elektronisch ansteuerbare LCD- Vorrichtung ist.

9. Verfahren zum elektronischen Erfassen eines Bildes (5) eines Gegenstandes (1) mit den Schritten:
Speichern von Lichtinformation durch eine Bildspeichervorrichtung (14), die mehrere Bildspeicherelemente (15) mit einer gegebenen geometrischen Ausdehnung (d) aufweist, und
Abbilden des Gegenstands (1) durch eine Abbildungseinrichtung (2) auf eine Bildebene (4) in der Vorrichtung, **gekennzeichnet durch** die Schritte: Ablenken eines ersten Teils des Lichtes von dem Gegenstand (1) über einen ersten Lichtausbreitungspfad (11) und eines zweiten Teils des Lichtes von dem Gegenstand (1) über einen zweiten Lichtausbreitungspfad (12) zu der Bildspeichervorrichtung (14) **durch** eine Separatorvorrichtung (6, 17), so dass eine Abbildung (16) von dem Gegenstand (1) auf der Bildspeichervorrichtung (14) erzeugt wird, und selektives Öffnen und Schließen jedes der wenigstens zwei Lichtausbreitungspfade (11, 12) nacheinander **durch** eine Verschlussvorrichtung (13a, 13b), so dass von der Bildspeichervorrichtung (14) nacheinander der erste Teil des Lichts von dem Gegenstand (1) über den ersten Lichtausbreitungspfad (11) und der zweite Teil des Lichts von dem Gegenstand (1) über den zweiten Lichtausbreitungspfad (12) erfasst wird.
